# FASCICULE DE BREVET EUROPEEN

(11) **EP 3 593 429 B1**
(45) Date de publication et mention de la délivrance du brevet: **21.04.2021**
(21) Numéro de dépôt: 18710108.4
(22) Date de dépôt: 23.02.2018
(51) Int. Cl.: H02H 3/14, H02M 1/32

(54) **CIRCUIT ÉLECTRIQUE DE DÉCHARGE D'UNE CAPACITÉ, SYSTÈME ÉLECTRIQUE ET VÉHICULE AUTOMOBILE COMPORTANT UN TEL CIRCUIT ÉLECTRIQUE DE DÉCHARGE**
ELEKTRISCHE SCHALTUNG ZUR ENTLADUNG EINES KONDENSATORS, ELEKTRISCHES SYSTEM UND KRAFTFAHRZEUG MIT SOLCH EINER ELEKTRISCHEN ENTLADUNGSSCHALTUNG
ELECTRIC CIRCUIT FOR DISCHARGING A CAPACITOR, ELECTRIC SYSTEM AND MOTOR VEHICLE COMPRISING SUCH AN ELECTRIC DISCHARGE CIRCUIT

(30) Priorité: 08.03.2017 FR 1751861
(43) Date de publication de la demande: 15.01.2020
(73) Titulaire: Valeo Equipements Electriques Moteur, 94046 Créteil Cedex (FR)
(72) Inventeur: LOY-LAFOND, Philippe, 94046 Creteil Cedex (FR)
(74) Mandataire: Mozelle, Gérard Jacques
(86) Numéro de dépôt international: PCT/FR2018/050442
(87) Numéro de publication internationale: WO 2018/162819

(56) Documents cités:
- EP-A1- 3 068 022
- US-B1- 6 204 612
- US-B2- 9 470 739

## Description

### DOMAINE TECHNIQUE

La présente invention concerne un circuit électrique de décharge d'une capacité, en particulier dans le domaine des véhicules automobiles électriques.

### ARRIÈRE-PLAN TECHNOLOGIQUE

Il est connu de prévoir une résistance connectée aux bornes d'une capacité alimentée par une source de haute tension. Ainsi, en cas de déconnexion de la source de haute tension, la capacité se décharge dans la résistance, afin de prévenir les chocs électriques qui pourraient survenir si un opérateur touchait la capacité. Cette solution présente comme inconvénient que l'élément de décharge passif consomme tout le temps du courant, y compris lorsque cela n'est pas souhaité c'est-à-dire lorsque la source de haute tension est connectée.

Le brevet américain publié sous le numéro US 6 204 612 B1 décrit un circuit électrique de décharge d'une capacité, du type comportant :
- deux bornes d'interface auxquelles la capacité est destinée à être connectée et entre lesquelles une tension de capacité est destinée à être présente,
- un circuit électrique consommateur de courant connecté entre les deux bornes d'interface et conçu pour consommer un courant de décharge de la capacité, et
- un circuit électrique de commande du circuit électrique consommateur de courant, le circuit électrique de commande étant connecté entre les deux bornes d'interface de manière à recevoir la tension de capacité.

Dans cette publication, le circuit électrique consommateur de courant est conçu pour être activé par le circuit électrique de commande afin de consommer un courant de décharge sensiblement constant lorsque la capacité est déconnectée d'un module de puissance. Plus précisément, le module de puissance comporte un conducteur agencé pour court-circuiter un interrupteur commandé du circuit électrique de commande afin de désactiver le circuit consommateur de courant. Ainsi, lorsque le module de puissance est déconnecté, le conducteur est détaché du circuit électrique de commande ce qui provoque l'activation du circuit électrique consommateur de courant. Cette solution présente comme inconvénient de nécessiter la présence d'un élément mécanique (le conducteur) du côté de la source de haute tension.

L'invention a pour but de proposer un circuit électrique de décharge permettant de remédier au moins en partie les inconvénients précédents.

### RÉSUMÉ DE L'INVENTION

À cet effet, il est proposé un circuit électrique de décharge d'une capacité, du type précité, caractérisé en ce que le circuit électrique de commande est conçu pour :
- lorsque la tension de capacité est supérieure à un seuil prédéfini, désactiver le circuit électrique consommateur de courant, et
- lorsque la tension de capacité entre les deux bornes d'interface est inférieur au seuil prédéfini, activer le circuit électrique consommateur de courant,
et en ce que le circuit électrique de commande est conçu pour être alimenté électriquement uniquement au travers des deux bornes d'interface.

Grâce à l'invention, l'activation du circuit électrique consommateur de courant se produit lorsque la tension de capacité passe sous un seuil, de sorte qu'il n'est plus nécessaire de prévoir d'élément mécanique externe pour activer la décharge de la capacité. En outre, comme le circuit électrique de commande est alimenté électriquement uniquement au travers des bornes d'interface, il est alimenté par la capacité lorsque cette dernière n'est plus connectée à un dispositif fournisseur d'énergie. Ainsi, la fiabilité du circuit électrique de décharge est améliorée.

De façon optionnelle, le circuit électrique consommateur de courant comporte un premier transistor présentant une borne d'entrée de courant une borne de sortie de courant et une borne de commande, le courant de décharge étant destiné à traverser le premier transistor en entrant par la borne d'entrée de courant et en sortant par la borne de sortie de courant, et le circuit électrique de commande est connecté à la borne de commande du transistor et conçu pour, d'une part, désactiver le circuit électrique consommateur de courant en ouvrant le transistor et, d'autre part, activer le circuit électrique consommateur de courant en fermant le transistor.

De façon optionnelle également, la borne de sortie de courant est connectée à la borne de commande afin de stabiliser le premier transistor.

De façon optionnelle également, le circuit électrique consommateur de courant comporte une diode Zener connectée entre la borne de sortie de courant et la borne de commande afin de stabiliser le premier transistor.

De façon optionnelle également, le circuit électrique de commande comporte : - un deuxième transistor présentant une borne d'entrée de courant, une borne de sortie de courant et une borne de commande, la borne d'entrée de courant du deuxième transistor étant connectée à la borne de commande du premier transistor ; et - au moins une diode Zener connectée entre la borne de commande du deuxième transistor et l'une des deux bornes d'interface.

Il est également proposé un système électrique comportant : - une capacité ; - un circuit électrique de décharge de la capacité selon l'invention ; - un dispositif fournisseur d'énergie électrique présentant deux bornes d'alimentation et conçu pour fournir de l'énergie électrique par les deux bornes d'alimentation ; - un dispositif récepteur d'énergie électrique connecté aux deux bornes d'interface et conçu pour recevoir l'énergie électrique fournie par le dispositif fournisseur d'énergie électrique.

De façon optionnelle, le dispositif fournisseur d'énergie électrique est conçu pour appliquer une tension d'alimentation continue.

De façon optionnelle également, la tension d'alimentation continue est supérieure à 60 V, de préférence supérieure à 300 V.

De façon optionnelle également, une première des bornes d'interface est destinée à présenter un potentiel plus élevé que l'autre des bornes d'interface et la ou les diodes Zener sont connectées entre la borne de commande du deuxième transistor et la première borne d'interface.

De façon optionnelle également, le dispositif fournisseur d'énergie électrique comporte l'un parmi : un chargeur de batterie et une batterie.

De façon optionnelle également, le dispositif récepteur d'énergie électrique comporte l'un parmi : une batterie et un onduleur.

Dans tout ce qui précède, le circuit électrique de décharge de la capacité peut être un circuit passif. Ce circuit électrique de décharge peut être alimenté électriquement uniquement au travers des deux bornes d'interface, en particulier par la capacité à décharger lorsque le dispositif fournisseur d'énergie électrique n'est pas opérationnel. Ce circuit électrique de décharge peut par ailleurs être dépourvu de tout composant informatique, c'est-à-dire de tout composant conçu pour exécuter un programme d'ordinateur, tel qu'un microcontrôleur ou un microprocesseur.

Il est également proposé un véhicule automobile comportant un système électrique selon l'invention.

### DESCRIPTION DES FIGURES

La figure 1 est un schéma électrique d'un système électrique comportant un circuit électrique, selon l'invention, de décharge d'une capacité.
La figure 2 est un chronogramme illustrant l'évolution au cours du temps d'une tension de capacité et d'un courant entrant dans le circuit électrique de décharge.
La figure 3 est un schéma illustrant un véhicule automobile comportant au moins un circuit électrique de décharge tel qu'illustré sur la figure 1.

### DESCRIPTION DÉTAILLÉE

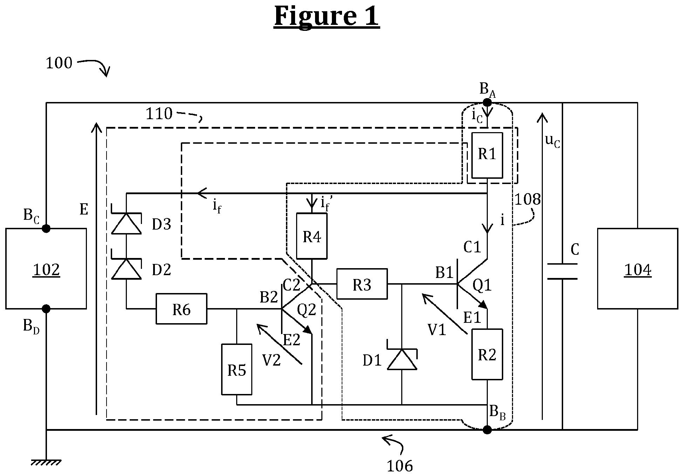

En référence à la figure 1, un système électrique 100 mettant en œuvre l'invention va à présent être décrit.

Le système électrique 100 comporte tout d'abord un dispositif fournisseur d'énergie électrique 102 présentant deux bornes d'alimentation électrique Bc, B_{D}. Le dispositif fournisseur d'énergie électrique 102 est conçu pour fournir de l'énergie électrique au travers des deux bornes d'alimentation électrique Bc, B_{D} en appliquant une tension d'alimentation E entre elles. Par exemple, la tension d'alimentation E est sensiblement constante. En outre, dans l'exemple décrit, la borne B_{D} est connectée à une masse électrique du système électrique 100 et la borne Bc est destinée à se trouver à un potentiel positif de +E V par rapport à la borne B_{D}.

Le système électrique 100 comporte en outre un dispositif récepteur d'énergie électrique 104 connecté entre les bornes d'alimentation électrique Bc, B_{D} et conçu pour recevoir l'énergie électrique fournie par le dispositif fournisseur d'énergie électrique 102.

Le système électrique 100 comporte en outre une capacité C connectée entre les bornes d'alimentation électrique Bc, B_{D} et conçue par exemple pour lisser la tension d'alimentation E. La capacité C présente une tension de capacité uc à ses bornes, égale à la tension d'alimentation E lorsque le dispositif fournisseur d'énergie électrique 102 est opérationnel.

Le système électrique 100 comporte en outre un circuit électrique de décharge 106 de la capacité C, destiné en particulier à décharger la capacité C lorsque le dispositif fournisseur d'énergie électrique 102 n'est pas opérationnel, par exemple lorsqu'il est déconnecté.

Le circuit électrique de décharge 106 comporte tout d'abord deux bornes d'interface B_{A}, B_{B} connectées aux bornes de la capacité C de manière à recevoir la tension de capacité uc.

Le circuit électrique de décharge 106 comporte en outre un circuit électrique consommateur de courant 108 connecté entre les bornes d'interface B_{A}, B_{B}.

Dans l'exemple décrit, le circuit électrique consommateur de courant 108 comporte un transistor Q1 présentant une borne d'entrée de courant C1, une borne de sortie de courant E1 et une borne de commande B1. Dans l'exemple décrit, le transistor Q1 est un transistor bipolaire présentant un collecteur, un émetteur et une base correspondant respectivement à la borne d'entrée de courant C1, la borne de sortie de courant E1 et la borne de commande B1. L'état du transistor Q1, ouvert ou fermé, est défini par une tension de commande V1 présente entre la borne de commande B1 et la borne de sortie de courant E1.

Dans l'exemple décrit, le circuit électrique consommateur de courant 108 comporte en outre une résistance R1 connectée entre la borne d'entrée de courant C1 et la borne d'interface B_{A}.

Dans l'exemple décrit, le circuit électrique consommateur de courant 108 comporte en outre une résistance R2 connectée entre la borne de sortie de courant E1 et la borne d'interface B_{B}.

Dans l'exemple décrit, le circuit électrique consommateur de courant 108 comporte en outre deux résistances R3, R4 connectées l'une à la suite de l'autre entre la borne de commande B1 et la borne d'entrée de courant C1.

Dans l'exemple décrit, le circuit électrique consommateur de courant 108 comporte en outre une diode Zener D1 connectée entre la borne de commande B1 et la borne d'interface B, de manière à stabiliser le transistor Q1.

Le circuit électrique de décharge 106 comporte en outre un circuit électrique de commande 110 du circuit électrique consommateur de courant 108. Le circuit électrique de commande 110 est connecté entre les deux bornes d'interface B_{A}, B_{B}.

Dans l'exemple décrit, le circuit électrique de commande 110 comporte un transistor Q2 présentant une borne d'entrée de courant C2, une borne de sortie de courant E2 et une borne de commande B2. Dans l'exemple décrit, le transistor Q2 est un transistor bipolaire présentant un collecteur, un émetteur et une base correspondant respectivement à la borne d'entrée de courant C2, la borne de sortie de courant E2 et la borne de commande B2. L'état du transistor Q2, ouvert ou fermé, est défini par une tension de commande V2 entre la borne de commande B2 et la borne de sortie de courant E2.

Dans l'exemple décrit, la borne de sortie de courant E2 est connectée à la borne d'interface B_{B}.

Dans l'exemple décrit, le circuit électrique de commande 110 comporte en outre une résistance R5 connectée entre la borne de commande B2 et la borne de sortie de courant E2. La connexion entre la borne de commande B2 et la borne de sortie de courant E2 via la résistance R5 permet également de stabiliser le transistor Q2.

Dans l'exemple décrit, le circuit électrique de commande 110 comporte en outre une résistance R6 et au moins une diode Zener D3, D2 connectées les unes à la suite des autres entre la borne de commande B2 et la borne de commande C1. Les diodes Zener D3, D2 présentent une tension de claquage combinée égale à la somme des tensions de claquage individuelles des diodes Zener D3, D2.

Dans l'exemple décrit, le circuit électrique de commande 110 comporte en outre la résistance R1. Ainsi, le circuit électrique de commande 110 reçoit la tension de capacité uc qui est appliquée en particulier aux bornes de la résistance R1, des diodes Zener D3, D2 et des résistances R5 et R6.

Par ailleurs, l'une ou plusieurs des résistances R1, R2, R3, R4, R5 et R6 est de préférence une résistance variant peu avec la température, par exemple variant au plus de 100 millionièmes d'Ohms par degré Celsius entre 0° C et 150°C.

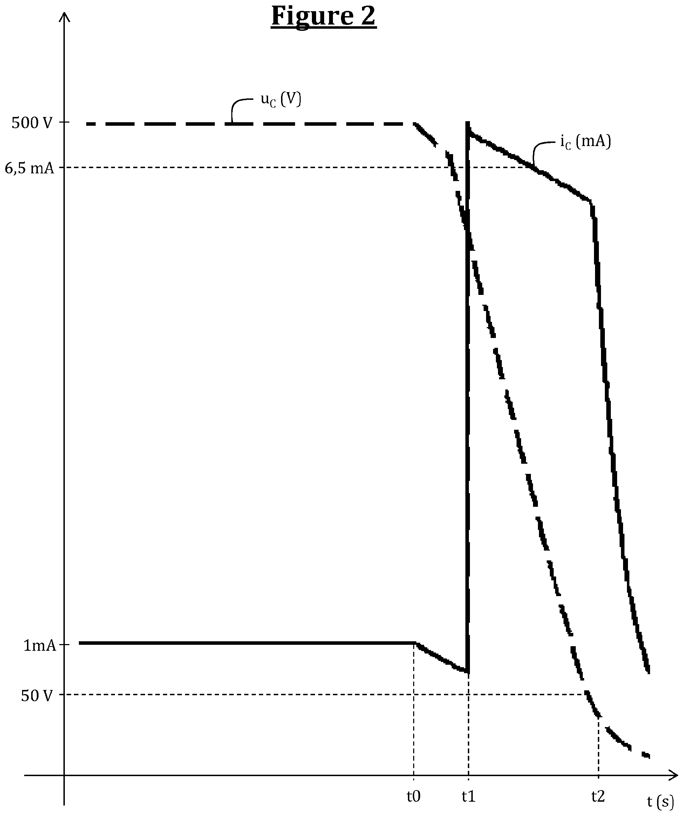

En référence à la figure 2, le fonctionnement du système électrique 100 va à présent être décrit.

Initialement, le dispositif fournisseur d'énergie électrique 102 est opérationnel et applique la tension d'alimentation E, qui vaut 500 V dans l'exemple décrit, entre ses bornes d'alimentation électrique Bc, B_{D}. De manière générale, la tension d'alimentation E est une « haute tension », c'est-à-dire, dans le domaine automobile, qu'elle vaut plus de 60 V, de préférence plus de 300 V.

Ainsi, la capacité C est chargée à la tension d'alimentation E de sorte que la tension de capacité uc est égale à la tension d'alimentation E.

Cette tension de capacité u_{C} est reçue par le circuit électrique de commande 110, de sorte que la tension aux bornes de la résistance R1, des diodes Zener D3, D2 et des résistances R5, R6 est égale à la tension d'alimentation E.

Or, la tension de claquage combinée des diodes Zener D3, D2 est choisie inférieure à la tension d'alimentation E, de sorte que les diodes Zener D3, D2 laissent passer un premier courant de fuite i_{f} s'écoulant depuis la borne B_{A} jusqu'à la borne B_{B} en passant dans les résistances R1, R6 et R5.

Du fait du passage du courant de fuite i_{f} dans la résistance R5, la tension de commande V2 est non nulle, de sorte que le transistor Q2 est maintenu à l'état fermé (passant).

Le transistor Q2 court-circuite donc la résistance R3 et la diode Zener D1, de sorte que la tension de commande V1 est sensiblement nulle.

Ainsi, le transistor Q1 est maintenu à l'état ouvert (non passant), de sorte que le circuit électrique consommateur de courant 108 est désactivé et que le courant de décharge i est sensiblement nul.

Par ailleurs, du fait que le transistor Q2 est fermé (passant) un deuxième courant de fuite i_{f}' s'écoule depuis la borne d'interface A jusqu'à la borne d'interface B en passant par la résistance R4.

Ainsi, le courant ic entrant par la borne d'interface B_{A} est égal à la somme des courants de fuite i_{f}, i_{f}'.

À un instant t₀, le dispositif fournisseur d'énergie électrique 102 passe à l'état non opérationnel, en étant par exemple déconnecté du reste du système électrique 100.

Ainsi, la capacité C se décharge, d'une part, dans les résistances R1, R5 et R6 et les diodes Zener D3, D2, ainsi que, d'autre part, dans la résistance R4, de sorte que la tension de capacité uc diminue.

Grâce à la stabilisation du transistor Q2, le courant de fuite i_{f}' est sensiblement constant (en fait, légèrement décroissant) ce qui permet une décharge assez rapide de la capacité C.

À un instant t1, la tension uc devient égale à la tension de claquage combinée des diodes Zener D3, D2 qui passent donc à l'état bloqué (non passant).

Ainsi, le courant de fuite i_{f} passant dans la résistance R5 devient nul, de sorte que la tension de commande V₂ devient nulle et que le transistor Q2 passe à l'état ouvert (non passant).

Ainsi, la borne de commande B1 reçoit le courant de fuite i_{f}' au travers des résistances R1, R4 et R3 et la tension de commande V1 devient non nulle. Le transistor Q1 passe donc à l'état fermé (passant), de sorte que le circuit électrique consommateur de courant 108 est activé et qu'un courant de décharge i non nul s'écoule de la borne B_{A} à la borne B_{B} au travers du transistor Q1. Le courant de décharge i est beaucoup plus grand que le courant de fuite i_{f}' de sorte que le courant ic entrant par la borne d'interface B_{A} est sensiblement égal au courant de décharge i.

Par ailleurs, comme le transistor Q1 est stabilisé, le courant de décharge i le traversant est sensiblement constant (en fait, légèrement décroissant) à un niveau nettement supérieure au courant de fuite i_{f}' entre l'instant t0 et l'instant t1, ce qui permet une décharge très rapide de la capacité C. De préférence, les composants sont choisis pour que la capacité C soit déchargée à moins de 60 V en moins de 60 s (instant t2 sur la figure 2).

D'après ce qui précède, le circuit électrique de décharge 106, et donc chacun du circuit électrique consommateur de courant 108 et du circuit électrique de commande 110, est un circuit passif ce qui signifie, d'une part, qu'il est conçu pour être alimenté électriquement uniquement au travers des deux bornes B_{A}, B_{B}, en particulier par la capacité C lorsque le dispositif fournisseur d'énergie électrique 102 n'est pas opérationnel et, d'autre part, qu'il ne comporte aucun composant informatique, c'est-à-dire aucun composant conçu pour exécuter un programme d'ordinateur, tel qu'un microcontrôleur ou un microprocesseur.

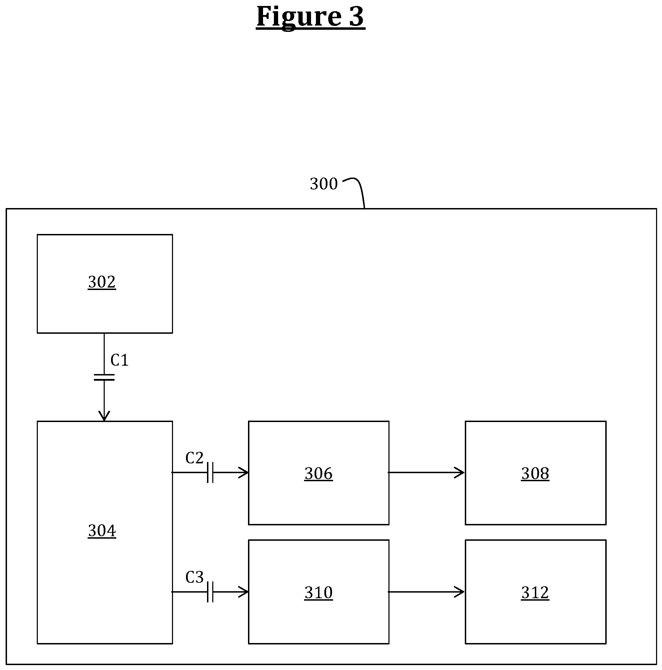

En référence à la figure 3, un véhicule automobile électrique 300 va à présent être décrit.

Le véhicule automobile électrique 300 comporte un chargeur 302 conçu pour être connecté à un réseau électrique et pour fournir une tension continue.

Le véhicule automobile électrique 300 comporte en outre une batterie haute tension 304 conçue pour être chargée par le chargeur 302.

Le véhicule automobile électrique 300 comporte en outre une capacité C1 intercalée entre le chargeur 302 et la batterie haute tension 304.

Le véhicule automobile électrique 300 comporte en outre un onduleur 306 conçue pour fournir des tensions alternatives à partir de la tension continue de la batterie haute tension 304.

Le véhicule automobile électrique 300 comporte en outre une capacité C2 intercalée entre la batterie haute tension 304 et l'onduleur 306.

Le véhicule automobile électrique 300 comporte en outre un moteur électrique 308 conçu pour être alimenté électriquement par l'onduleur 306 et pour entraîner des roues du véhicule automobile électrique 300.

Le véhicule automobile électrique 300 comporte en outre un convertisseur continu-continu 310 conçu pour fournir une tension basse à partir de la tension haute fournie par la batterie haute tension 304.

Le véhicule automobile électrique 300 comporte en outre une capacité C3 intercalée entre la batterie haute tension 304 et le convertisseur continu-continu 310.

Le véhicule automobile électrique 300 comporte en outre une batterie basse tension 312 conçue pour être chargée par le convertisseur continu-continu 310. La batterie basse tension 312 sert par exemple à l'alimentation électrique d'accessoires du véhicule automobile électrique 300.

Le circuit électrique de décharge 106 décrit en référence à la figure 2 peut être utilisé pour chacune des capacités C1, C2, C3. Ainsi, suivant la capacité concernée, le dispositif fournisseur d'énergie électrique 102 comporte ainsi l'un parmi : le chargeur 302 et la batterie haute tension 304 et le dispositif récepteur d'énergie électrique comporte l'un parmi : la batterie haute tension 304, l'onduleur 306 et le convertisseur continu-continu 310.

La présente invention n'est pas limitée au mode de réalisation décrit précédemment, mais est au contraire définie par les revendications qui suivent. Il sera en effet apparent à l'homme du métier que des modifications peuvent y être apportées.

Par exemple, l'une ou l'autre des résistances R1 et R2 pourrait être omise.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

En particulier, les termes de « véhicule automobile électrique » couvrent également le cas des véhicules automobiles hybrides, comportant à la fois un moteur électrique et un moteur thermique pour l'entraînement des roues.

## Revendications

1. Circuit électrique de décharge (106) d'une capacité (C), comportant :
- deux bornes d'interface (B_{A}, B_{B}) auxquelles la capacité (C) est destinée à être connectée et entre lesquelles une tension de capacité (u_{C}) est destinée à être présente,
- un circuit électrique consommateur de courant (108) connecté entre les deux bornes d'interface (B_{A}, B_{B}) et conçu pour consommer un courant de décharge (i) de la capacité (C), et
- un circuit électrique de commande (110) du circuit électrique consommateur de courant (108), le circuit électrique de commande (110) étant connecté entre les deux bornes d'interface (B_{A}, B_{B}) de manière à recevoir la tension de capacité (u_{C}),
**caractérisé en ce que** le circuit électrique de commande (110) est conçu pour :
- lorsque la tension de capacité (u_{C}) est supérieure à un seuil prédéfini, désactiver le circuit électrique consommateur de courant (108), et
- lorsque la tension de capacité (u_{C}) entre les deux bornes d'interface (B_{A}, B_{B}) est inférieur au seuil prédéfini, activer le circuit électrique consommateur de courant (108),
et **en ce que** le circuit électrique de commande (110) est conçu pour être alimenté électriquement uniquement au travers des deux bornes d'interface (B_{A}, B_{B}).

2. Circuit électrique de décharge (106) selon la revendication 1, dans lequel le circuit électrique consommateur de courant (108) comporte un premier transistor (Q1) présentant une borne d'entrée de courant (C1) une borne de sortie de courant (E1) et une borne de commande (B1), le courant de décharge (i) étant destiné à traverser le premier transistor (Q1) en entrant par la borne d'entrée de courant (C1) et en sortant par la borne de sortie de courant (E1), et dans lequel le circuit électrique de commande (110) est connecté à la borne de commande (B1) du transistor (Q1) et conçu pour, d'une part, désactiver le circuit électrique consommateur de courant (108) en ouvrant le transistor (Q1) et, d'autre part, activer le circuit électrique consommateur de courant (108) en fermant le transistor (Q1).

3. Circuit électrique de décharge (106) selon la revendication 2, dans lequel la borne de sortie de courant (E1) est connectée à la borne de commande (B1) afin de stabiliser le premier transistor (Q1).

4. Circuit électrique de décharge (106) selon la revendication 3, dans lequel le circuit électrique consommateur de courant (108) comporte une diode Zener (D1) connectée entre la borne de sortie de courant (E1) et la borne de commande (B1) afin de stabiliser le premier transistor (Q1).

5. Circuit électrique de décharge (106) selon l'une quelconque des revendications 2 à 4, dans lequel le circuit électrique de commande (110) comporte :
- un deuxième transistor (Q2) présentant une borne d'entrée de courant (C2), une borne de sortie de courant (E2) et une borne de commande (B2), la borne d'entrée de courant (C2) du deuxième transistor (Q2) étant connectée à la borne de commande (B1) du premier transistor (Q1), et
- au moins une diode Zener (D3, D2) connectée entre la borne de commande (B2) du deuxième transistor (Q2) et l'une (B_{A}) des deux bornes d'interface (B_{A}, B_{B}).

6. Circuit électrique de décharge (106) selon l'une quelconque des revendications précédentes, étant un circuit passif.

7. Système électrique (100) comportant :
- une capacité (C),
- un circuit électrique de décharge (106) de la capacité (C) selon l'une quelconque des revendications 1 à 6,
- un dispositif fournisseur d'énergie électrique (102) présentant deux bornes d'alimentation (Bc, B_{D}) et conçu pour fournir de l'énergie électrique par les deux bornes d'alimentation (B_{C}, B_{D}),
- un dispositif récepteur d'énergie électrique (104) connecté aux deux bornes d'interface (B_{A}, B_{B}) et conçu pour recevoir l'énergie électrique fournie par le dispositif fournisseur d'énergie électrique (102).

8. Système électrique (100) selon la revendication 7, dans lequel le dispositif fournisseur d'énergie électrique (102) est conçu pour appliquer une tension d'alimentation (E) continue.

9. Système électrique (100) selon la revendication 8, dans lequel la tension d'alimentation (E) continue est supérieure à 60 V, de préférence supérieure à 300 V.

10. Système électrique (100) selon la revendication 8 ou 9, dans lequel une première (B_{A}) des bornes d'interface (B_{A}, B_{B}) est destinée à présenter un potentiel plus élevé que l'autre (B_{B}) des bornes d'interface (B_{A}, B_{B}) et dans lequel la ou les diodes Zener (D3, D2) sont connectées entre la borne de commande (B2) du deuxième transistor (Q2) et la première borne d'interface (B_{A}).

11. Système électrique (100) selon l'une quelconque des revendications 7 à 10, dans lequel le dispositif fournisseur d'énergie électrique (102) comporte l'un parmi : un chargeur de batterie et une batterie.

12. Système électrique (100) selon l'une quelconque des revendications 7 à 11, dans lequel le dispositif récepteur d'énergie électrique (104) comporte l'un parmi : une batterie et un onduleur.

13. Véhicule automobile (300) comportant un système électrique (100) selon l'une quelconque des revendications 7 à 12.

## Patentansprüche

1. Elektrische Schaltung zur Entladung (106) eines Kondensators (C), die Folgendes umfasst:
- zwei Schnittstellenanschlüsse (B_{A}, B_{B}) , mit denen der Kondensator (C) verbunden werden soll und zwischen denen eine Kondensatorspannung (u_{C}) anliegen soll,
- eine elektrische Stromverbrauchsschaltung (108), die zwischen den zwei Schnittstellenanschlüssen (B_{A}, B_{B}) verbunden ist und dazu ausgelegt ist, einen Entladungsstrom (i) des Kondensators (C) zu verbrauchen, und
- eine elektrische Steuerschaltung (110) der elektrischen Stromverbrauchsschaltung (108), wobei die elektrische Steuerschaltung (110) so zwischen den zwei Schnittstellenanschlüssen (B_{A}, B_{B}) verbunden ist, dass sie die Kondensatorspannung (u_{c}) aufnimmt, **dadurch gekennzeichnet, dass** die elektrische Steuerschaltung (110) für Folgendes ausgelegt ist:
- wenn die Kondensatorspannung (u_{c}) größer als ein vordefinierter Schwellenwert ist, Deaktivieren der elektrischen Stromverbrauchsschaltung (108), und
- wenn die Kondensatorspannung (u_{c}) zwischen den zwei Schnittstellenanschlüssen (B_{A}, B_{B}) kleiner als der vordefinierte Schwellenwert ist, Aktivieren der elektrischen Stromverbrauchsschaltung (108),
und dadurch, dass die elektrische Steuerschaltung (110) dazu ausgelegt ist, nur über die zwei Schnittstellenanschlüsse (B_{A}, B_{B}) elektrisch mit Strom versorgt zu werden.

2. Elektrische Entladungsschaltung (106) nach Anspruch 1, wobei die elektrische Stromverbrauchsschaltung (108) einen ersten Transistor (Q1) umfasst, der einen Stromeingangsanschluss (C1), einen Stromausgangsanschluss (E1) und einen Steueranschluss (B1) aufweist, wobei der Entladungsstrom (i) dazu bestimmt ist, den ersten Transistor (Q1) zu durchqueren, indem er durch den Stromeingangsanschluss (C1) eintritt und durch den Stromausgangsanschluss (E1) austritt, und wobei die elektrische Steuerschaltung (110) mit dem Steueranschluss (B1) des Transistors (Q1) verbunden ist und dazu ausgelegt ist, einerseits die elektrische Stromverbrauchsschaltung (108) zu deaktivieren, indem sie den Transistor (Q1) öffnet, und andererseits die elektrische Stromverbrauchsschaltung (108) zu aktivieren, indem sie den Transistor (Q1) schließt.

3. Elektrische Entladungsschaltung (106) nach Anspruch 2, wobei der Stromausgangsanschluss (E1) mit dem Steueranschluss (B1) verbunden ist, um den ersten Transistor (Q1) zu stabilisieren.

4. Elektrische Entladungsschaltung (106) nach Anspruch 3, wobei die elektrische Stromverbrauchsschaltung (108) eine Zenerdiode (D1) umfasst, die zwischen dem Stromausgangsanschluss (E1) und dem Steueranschluss (B1) verbunden ist, um den ersten Transistor (Q1) zu stabilisieren.

5. Elektrische Entladungsschaltung (106) nach einem der Ansprüche 2 bis 4, wobei die elektrische Steuerschaltung (110) Folgendes umfasst:
- einen zweiten Transistor (Q2), der einen Stromeingangsanschluss (C2), einen Stromausgangsanschluss (E2) und einen Steueranschluss (B2) aufweist, wobei der Stromeingangsanschluss (C2) des zweiten Transistors (Q2) mit dem Steueranschluss (B1) des ersten Transistors (Q1) verbunden ist, und
- mindestens eine Zenerdiode (D3, D2), die zwischen dem Steueranschluss (B2) des zweiten Transistors (Q2) und einem (B_{A}) von den zwei Schnittstellenanschlüssen (B_{A}, B_{B}) verbunden ist.

6. Elektrische Entladungsschaltung (106) nach einem der vorhergehenden Ansprüche, die eine passive Schaltung ist.

7. Elektrisches System (100), das Folgendes umfasst:
- einen Kondensator (C),
- eine elektrische Schaltung zur Entladung (106) des Kondensators (C) nach einem der Ansprüche 1 bis 6,
- eine Vorrichtung zur Bereitstellung elektrischer Energie (102), die zwei Versorgungsanschlüsse (B_{C}, B_{D}) aufweist und dazu ausgelegt ist, über die zwei Versorgungsanschlüsse (B_{C}, B_{D}) elektrische Energie bereitzustellen,
- eine Vorrichtung zur Aufnahme elektrischer Energie (104), die mit den zwei Schnittstellenanschlüssen (B_{A}, B_{B}) verbunden ist und dazu ausgelegt ist, die elektrische Energie aufzunehmen, die von der Vorrichtung zur Bereitstellung elektrischer Energie (102) bereitgestellt wird.

8. Elektrisches System (100) nach Anspruch 7, wobei die Vorrichtung zur Bereitstellung elektrischer Energie (102) dazu ausgelegt ist, eine Versorgungsgleichspannung (E) anzulegen.

9. Elektrisches System (100) nach Anspruch 8, wobei die Versorgungsgleichspannung (E) größer als 60 V, vorzugsweise größer als 300 V ist.

10. Elektrisches System (100) nach Anspruch 8 oder 9, wobei ein erster (B_{A}) der Schnittstellenanschlüsse (B_{A}, B_{B}) dazu bestimmt ist, ein höheres Potential als der andere (B_{B}) der Schnittstellenanschlüsse (B_{A}, B_{B}) aufzuweisen, und wobei die eine oder die mehreren Zenerdioden (D3, D2) zwischen dem Steueranschluss (B2) des zweiten Transistors (Q2) und dem ersten Schnittstellenanschluss (B_{A}) verbunden sind.

11. Elektrisches System (100) nach einem der Ansprüche 7 bis 10, wobei die Vorrichtung zur Bereitstellung elektrischer Energie (102) eines von Folgenden umfasst: einem Batterieladegerät und einer Batterie.

12. Elektrisches System (100) nach einem der Ansprüche 7 bis 11, wobei die Vorrichtung zur Aufnahme elektrischer Energie (104) eines von Folgenden umfasst: einer Batterie und einem Wechselrichter.

13. Kraftfahrzeug (300), das ein elektrisches System (100) nach einem der Ansprüche 7 bis 12 umfasst.

## Claims

1. Electrical discharge circuit (106) for discharging a capacitor (C), including:
- two interface terminals (B_{A}, B_{B}) , to which the capacitor (C) is intended to be connected and across which a capacitor voltage (u_{c}) is intended to be present,
- a current-consuming electrical circuit (108) connected between the two interface terminals (B_{A}, B_{B}) and designed to consume a discharge current (i) from the capacitor (C), and
- an electrical control circuit (110) for controlling the current-consuming electrical circuit (108), the electrical control circuit (110) being connected between the two interface terminals (B_{A}, B_{B}) so as to receive the capacitor voltage (u_{C}), **characterized in that** the electrical control circuit (110) is designed:
- to deactivate the current-consuming electrical circuit (108) when the capacitor voltage (u_{c}) is above a predefined threshold, and
- to activate the current-consuming electrical circuit (108) when the capacitor voltage (u_{c}) across the two interface terminals (B_{A}, B_{B}) is below the predefined threshold,
and **in that** the electrical control circuit (110) is designed to be supplied with electrical power exclusively via the two interface terminals (B_{A}, B_{B}) .

2. Electrical discharge circuit (106) according to Claim 1, wherein the current-consuming electrical circuit (108) includes a first transistor (Q1) having a current input terminal (C1), a current output terminal (E1) and a control terminal (B1), the discharge current (i) being intended to flow through the first transistor (Q1) by entering via the current input terminal (C1) and exiting via the current output terminal (E1), and wherein the electrical control circuit (110) is connected to the control terminal (B1) of the transistor (Q1) and is designed both to deactivate the current-consuming electrical circuit (108) by opening the transistor (Q1) and to activate the current-consuming electrical circuit (108) by closing the transistor (Q1).

3. Electrical discharge circuit (106) according to Claim 2, wherein the current output terminal (E1) is connected to the control terminal (B1) in order to stabilize the first transistor (Q1).

4. Electrical discharge circuit (106) according to Claim 3, wherein the current-consuming electrical circuit (108) includes a Zener diode (D1) connected between the current output terminal (E1) and the control terminal (B1) in order to stabilize the first transistor (Q1).

5. Electrical discharge circuit (106) according to any one of Claims 2 to 4, wherein the electrical control circuit (110) includes:
- a second transistor (Q2) having a current input terminal (C2), a current output terminal (E2) and a control terminal (B2), the current input terminal (C2) of the second transistor (Q2) being connected to the control terminal (B1) of the first transistor (Q1), and
- at least one Zener diode (D3, D2) connected between the control terminal (B2) of the second transistor (Q2) and one (B_{A}) of the two interface terminals (B_{A}, B_{B}) .

6. Electrical discharge circuit (106) according to any one of the preceding claims, said circuit being a passive circuit.

7. Electrical system (100) including:
- a capacitor (C),
- an electrical discharge circuit (106) for discharging the capacitor (C) , according to any one of Claims 1 to 6,
- an electrical power supply device (102) having two power supply terminals (B_{C}, B_{D}) and designed to supply electrical power via the two power supply terminals (B_{C}, B_{D}),
- an electrical power receiving device (104) connected to the two interface terminals (B_{A}, B_{B}) and designed to receive the electrical power supplied by the electrical power supply device (102) .

8. Electrical system (100) according to Claim 7, wherein the electrical power supply device (102) is designed to apply a DC supply voltage (E).

9. Electrical system (100) according to Claim 8, wherein the DC supply voltage (E) is higher than 60 V, preferably higher than 300 V.

10. Electrical system (100) according to Claim 8 or 9, wherein a first one (B_{A}) of the interface terminals (B_{A}, B_{B}) is intended to have a higher potential than the other one (B_{B}) of the interface terminals (B_{A}, B_{B}) , and wherein the one or more Zener diodes (D3, D2) are connected between the control terminal (B2) of the second transistor (Q2) and the first interface terminal (B_{A}).

11. Electrical system (100) according to any one of Claims 7 to 10, wherein the electrical power supply device (102) includes one of the following: a battery charger and a battery.

12. Electrical system (100) according to any one of Claims 7 to 11, wherein the electrical power receiving device (104) includes one of the following: a battery and an inverter.

13. Motor vehicle (300) including an electrical system (100) according to any one of Claims 7 to 12.
